# EUROPÄISCHE PATENTANMELDUNG

(11) **EP 2 295 237 A1**
(43) Veröffentlichungstag der Anmeldung: **16.03.2011**
(21) Anmeldenummer: 09011717.7
(22) Anmeldetag: 14.09.2009
(51) Int. Cl.: B32B 7/12, B32B 5/18, B32B 5/20, B32B 27/40, B32B 27/06, B32B 15/20, B32B 15/08, C08J 5/12, C09J 111/02

(54) **Verfahren zur Herstellung eines Schaumstoff-Verbundelements mittels einer Haftvermittlerdispersion**

(71) Anmelder: Bayer MaterialScience AG, 51368 Leverkusen (DE)
(72) Erfinder: Die Erfindernennung liegt noch nicht vor

(57) **Zusammenfassung**

Die vorliegende Erfindung betrifft ein Verfahren zur Herstellung eines Schaumstoff-Verbundelements, umfassend die Schritte des Bereitstellens einer Deckschicht, des Auftragens einer Haftvermittlerschicht auf die Deckschicht, wobei die Haftvermittlerschicht eine Haftvermittlerdispersion umfasst, sowie des Auftragens einer Polyurethan und/oder Polyisocyanurat umfassenden Schaumstoffschicht auf die Haftvermittlerschicht. Hierbei umfasst die aufgetragene Haftvermittlerdispersion in Wasser dispergiertes Polychloropren. Die Erfindung betrifft weiterhin die Verwendung einer wässrigen Polychloroprendispersion als Haftvermittler in der Herstellung von Schaumstoff-Verbundelementen und erfindungsgemäß hergestellte Schaumstoff-Verbundelemente.

## Beschreibung

Die vorliegende Erfindung betrifft ein Verfahren zur Herstellung eines Schaumstoff-Verbundelements, umfassend die Schritte des Bereitstellens einer Deckschicht, des Auftragens einer Haftvermittlerschicht auf die Deckschicht, wobei die Haftvermittlerschicht eine Haftvermittlerdispersion umfasst sowie des Auftragens einer Polyurethan und/oder Polyisocyanurat umfassenden Schaumstoffschicht auf die Haftvermittlerschicht. Die Erfindung betrifft weiterhin die Verwendung einer wässrigen Polychloroprendispersion als Haftvermittler in der Herstellung von Schaumstoff-Verbundelementen und erfindungsgemäß hergestellte Schaumstoff Verbundelemente.

Durch das Verbot von Fluorchlorkohlenwasserstoffen als Treibmittel in Polyurethan-(PUR-) Systemen werden für die Herstellung Verbundelementen zur Wärmedämmung häufig brennbare Treibmittel, wie zum Beispiel Pentane, verwendet. Unter diesen Voraussetzungen ist die Erfüllung von Brandschutzanforderungen mit Polyurethan-Systemen, die einen hohen Anteil an Flammschutzmittel enthalten, nur bedingt möglich.

Oft ist technisch bedingt ein geringerer Flammschutzgehalt wünschenswert. Daher werden für Dämmelement auch Polyisocyanuratschaumstoffe (PIR-Schaumstoffe) verwendet, da diese auch mit einem reduzierten Flammschutzmittelgehalt gute Flammschutzeigenschaften besitzen. PIR-Systeme haben jedoch eine im Vergleich zu PUR-Systemen geringere Haftung zu den meisten bekannten Oberflächen.

Für die Bauindustrie werden Polyurethan-Verbundelemente hergestellt, die konstruktive Aufgaben erfüllen müssen, wie beispielsweise Wand- und Dachelemente. Bei diesen Konstruktionselementen spielt die Haftung zwischen der Schaumstoffschicht und den Deckschichten eine wichtige Rolle. Konstruktionselemente mit metallischen Deckschichten sollten mindestens einen Haftungswert von ≥ 0,08 N/mm² aufweisen, damit sie für die Bauindustrie zugelassen werden. PUR-Systeme haben auf metallischen Deckschichten typischerweise Haftungswerte von 0,12 bis 0,17 N/mm². Die bekannten Haftungswerte von PIR-Systemen sind im Durchschnitt kleiner als 0,1 N/mm².

In diesem Zusammenhang offenbart WO 1999/00559 A1 Verbundelemente mit einem planaren, steifen und zellulären Polyisocyanurat- oder Polyurethanschaum-Kern. Auf einer Seite des Polyisocyanuratschaum-Kerns befindet sich eine Metallschicht. Die Haftung der Metallschicht zum Polyisocyanuratschaum- oder Polyurethanschaum-Kern wird durch die Verwendung einer Haftvermittlerschicht, wie zum Beispiel einem Polyharnstoff oder Polyepoxid, verbessert. Vorzugsweise werden hier im Polyisocyanuratschaum- oder Polyurethanschaum-Kern Glasfasern zur Verstärkung und als Flammschutzmittel beigefügt.

EP 1 516 720 A1 offenbart die Verwendung eines Polyurethan-Haftvermittlers zur Verbesserung der Haftung zwischen den Schichten eines Verbundelements, enthaltend einen Polyisocyanuratschaumstoff und Deckschichten, sowie die Verbundelemente als solche und ein Verfahren zur Herstellung der Verbundelemente. Bevorzugte Ausführungsformen betreffen die Verwendung von reaktivem 2K-Polyurethan-Haftvermittler, welcher beim Zusammenbringen von Schaumstoffschicht und Deckschicht noch reaktionsfähig ist. Dieses birgt jedoch ein Gefährdungspotential gegenüber Anwendern.

Wünschenswert wäre die Möglichkeit, insbesondere zur Wärmedämmung verwendbare Schaumstoff-Verbundelemente herzustellen, wobei nicht kennzeichnungspflichtige Haftvermittler zum Einsatz kommen können.

Erfindungsgemäß vorgeschlagen wird daher ein Verfahren zur Herstellung eines Schaumstoff-Verbundelements, umfassend die Schritte:
A) Bereitstellen einer Deckschicht;
B) Auftragen einer Haftvermittlerschicht auf die Deckschicht, wobei die Haftvermittlerschicht eine Haftvermittlerdispersion umfasst;
C) Auftragen einer Polyurethan und/oder Polyisocyanurat umfassenden Schaumstoffschicht auf die Haftvermittlerschicht;
wobei die aufgetragene Haftvermittlerdispersion in Wasser dispergiertes Polychloropren umfasst.

Durch den Verzicht auf reaktive Zweikomponentensysteme als Haftvermittler lässt sich die Arbeitssicherheit für die Anwender erhöhen. Die erfindungsgemäß hergestellten Schaumstoff-Verbundelemente eignen sich insbesondere als Wärmedämmelement.

Schritt A) des erfindungsgemäßen Verfahrens beinhaltet das Bereitstellen einer Deckschicht. Das Material für die Deckschicht ist zunächst nicht weiter beschränkt, kann flexibel oder starr sein und richtet sich nach dem Einsatzzweck des Verbundelements. Die Dicke der Deckschicht kann beispielsweise im Bereich zwischen 1 bis 400 µm, bevorzugt im Bereich zwischen 2 und 300 µm, ganz besonders bevorzugt im Bereich zwischen 5 und 200 µm liegen.

In Schritt B) wird eine Haftvermittlerschicht auf die Deckschicht aufgetragen. Diese Haftvermittlerschicht umfasst eine Haftvermittlerdispersion. Es ist möglich, dass die Haftvermittlerschicht identisch zur Haftvermittlerdispersion ist, dass folglich neben der Haftvermittlerdispersion keine weiteren Komponenten in der Haftvermittlerschicht vorliegen. Die Dicke der Haftvermittlerschicht kann beispielsweise im Bereich zwischen 1 und 400 µm, bevorzugt im Bereich zwischen 3 und 300 µm, ganz besonders bevorzugt im Bereich zwischen 5 und 200 µm liegen.

Eine besondere Eigenschaft der Haftvermittlerdispersion ist, dass sie nicht wasserfrei sein muss, bevor der Auftrag der Schaumschicht erfolgt.

Erfindungsgemäß ist hierbei vorgesehen, dass die auf die Deckschicht aufgetragene Haftvermittlerdispersion in Wasser dispergiertes Polychloropren umfasst. Geeignete Polychloroprendispersionen werden durch Emulsionspolymerisation von Chloropren (2-Chlor-1,3-butadien), gegebenenfalls in Gegenwart von copolymerisierbaren ethylenisch ungesättigten Monomeren, im alkalischen Medium hergestellt. Die Polychloroprenherstellung an sich ist dem Fachmann bekannt. Als Emulgatoren kommen prinzipiell alle Verbindungen und deren Mischungen in Betracht, die die Emulsion hinreichend stabilisieren, wie zum Beispiel die wasserlöslichen Salze, insbesondere die Natrium-, Kalium und Ammoniumsalze von langkettigen Fettsäuren, Kolophonium und Kolophoniumderivate, höhermolekulare Alkoholsulfate, Arylsulfonsäuren, FormaldehydKondensate von Arylsulfonsäuren, nichtionische Emulgatoren auf Polyethylenoxid- und Polypropylenoxid-Basis sowie emulgierend wirkende Polymere wie Polyvinylalkohol.

Der Gewichtsanteil des Polychloroprens in der Haftvermittlerdispersion kann in einem Bereich von ≥ 30 Gewichts-% bis ≤ 100 Gewichts-%, vorzugsweise von ≥ 35 Gewichts-% bis ≤ 95 Gewichts-% und mehr bevorzugt von ≥ 40 Gewichts-% bis ≤ 90 Gewichts-% liegen.

Erfindungsgemäß geeignete Polychloroprene können unter anderem in Gegenwart von ≥ 0 Gewichtsteilen bis ≤ 20 Gewichtsteilen, bezogen auf 100 Gewichtsteile Chloropren, copolymerisierbaren ethylenisch ungesättigten Monomeren in Gegenwart von ≥ 0 mmol bis ≤ 1 mmol eines Reglers, bezogen auf 100 g Monomer, bei Temperaturen von ≥ 0 °C bis ≤ 20 °C in alkalischer Emulsion hergestellt werden. Copolymerisierbare Monomere sind beispielsweise Verbindungen mit ≥ 3 bis ≤ 20 C-Atomen und einer oder zwei copolymerisierbaren C=C-Doppelbindungen pro Molekül. Bevorzugte Monomere sind 2,3-Dichlor-1,3-butadien, 1-Chlor-1,3-butadien, Acrylnitril, Acrylsäure, Maleinsäure, Fumarsäure oder Ethylenglycoldimethacrylat.

Es ist möglich, dass die Polymere der Polychloroprendispersion eine Glasübergangstemperatur Tg von ≥ -60 °C bis ≤ 50 °C aufweisen. Dieser Wert kann anhand mittels handelsüblichen DSC Messgeräten bestimmt werden. Vorteilhaft an einer solchen Glasübergangstemperatur ist, dass für die Anbindung an die Deckschicht und die Schaumschicht unter Prozessbedingungen amorphe Polymerphasen zur Verfügung stehen. Es ist auch möglich, dass die Glasübergangstemperatur Tg in einem Bereich von ≥ -50 °C bis ≤ 40 °C oder von ≥ -40 °C bis ≤ 30 °C liegt.

Die erfindungsgemäß eingesetzte Haftvermittlerdispersion kann neben Polychloropren noch weitere Bestandteile umfassen. Als Beispiele seien Polyacrylat-Dispersionen, Polyurethan-Dispersionen, Polyurethan-Polyacrylat-Dispersionen, Styrolbutadien-Dispersionen und/oder Acrylnitril-Butadien-Dispersionen genannt. Hilfs- und Füllstoffe können in Wasser kolloidal verteilte nanodisperse Kieselsäurepartikel, Ruße, andere dispergierbare Füllstoffe (Quarzmehl, Quarzsand, Schwerspat, Calciumcarbonat, Kreide, Dolomit oder Talkum), Stabilisatoren wie Hydrolyse-Inhibitoren, Antioxidantien, Licht-und UV-Schutzmittel, Weichmacher, Verlaufshilfsmittel, Netzmittel (Polyphosphaten wie Natriumhexametaphosphat, Naphthalinsulfonsäure, Ammonium- oder Natriumpolyacryl-Säuresalze), Verdicker, Farbstoffe, organische und anorganische Salze, Flammschutzmittel, Pigmente, Biozide, Fungizide und/oder Verseifungshilfsmittel sein.

Gegebenenfalls können auch klebrigmachende Harze, beispielsweise unmodifizierte oder modifizierte Naturharze wie Kolophoniumester, Kohlenwasserstofiharze oder synthetische Harze wie Phthalatharze der Haftvermittlerdispersion in dispergierter Form zugesetzt werden. Bevorzugt sind Alkylphenolharz- und Terpenphenolharz-Dispersionen mit Erweichungspunkten von ≥ 70 °C, besonders bevorzugt ≥ 110 °C. Ebenfalls möglich ist ein Zusatz von organischen Lösungsmittel wie beispielsweise Toluol, Xylol, Butylacetat, Methylethylketon, Ethylacetat, Dioxan oder deren Gemische oder Weichmachern, wie beispielsweise solche auf Adipat-, Phthalat- oder Phosphatbasis. Es ist ebenfalls möglich, dass die Haftvermittlerdispersion zusätzliche Aktivatoren umfasst. Solche Aktivatoren können einwertige, zweiwertige oder dreiwertige anorganische Salze wie LiCl, KCI, NaCl, ZnCl₂, MgCl₂, CaCl₂, ZnO, MgO, FeCl₃, AlCl₃, Al₂(SO₄)₃ oder anorganische oder organische Säuren wie HCl, Borsäure, Phosphorsäure, Essigsäure, Glycin oder andere Aminosäuren, Zitronensäure sowie die Alkali- oder Erdalkalimetallsalze dieser Säuren sowie Kohlensäure in gasförmiger Form (CO₂) sein. Diese können zur Voraktivierung der Dispersion eingesetzt werden, also zur Einstellung eines bestimmten pH-Wertes.

Weiterhin kann die Haftvermittlerdispersion zusätzlich hydrophilierte Polyisocyanate auf der Basis von vorzugsweise aliphatischen Isocyanaten wie Isophorondiisocyanat (IPDI), Diisocyanatodicyclohexylmethan (H₁₂-MDI) und/oder Hexamethylendiisocyanat (HDI) umfassen. Geeignet sind zum Beispiel in Wasser dispergierbare Polyisocyanat-Zubereitungen aus einem aliphatischen Polyisocyanat und einem Umsetzungsprodukt eines aliphatischen Polyisocyanats mit einem ein- oder mehrwertigen, nichtionischen Polyalkylenetheralkohol als Emulgator. Umsetzungsprodukte können beispielsweise Isocyanurate, Biurete oder Allophanate der genannten Isocyanate sein. Als nichtionische Emulgatoren sind auch mit Polyvinylpyrrolidon modifizierte Polyisocyanate geeignet. Als dispergieraktive Bausteine finden auch Carbonsäuregruppen umfassende Polyalkylenoxidether oder Polyetheresteralkohole Verwendung.

Die Haftvermittlerdispersion kann eine Viskosität bei 23 °C, gemessen gemäß DIN EN ISO 2555 mittels Brookfieldviskosimeter von ≥ 1 mPas bis ≤ 200000 mPas, bevorzugt von ≥ 5 mPas bis ≤ 100000 mPas, mehr bevorzugt von ≥ 10 mPas bis ≤ 10000 mPas und besonders bevorzugt von ≥ 20 mPas bis ≤ 5000 mPas aufweisen. Im Verfahren kann die Haftvermittlerdispersion beispielsweise auf die Deckschicht in einer Menge von ≥ 10 g/m² bis ≤ 300 g/m² aufgetragen werden.

Schritt C) betrifft das Auftragen einer Schaumstoffschicht auf die Haftvermittlerschicht. Diese Schicht kann zum Beispiel in einer Dicke von ≥ 2 cm bis ≤ 100 cm, von ≥ 2,5 cm bis ≤ 50 cm und vorzugsweise von ≥ 3 cm bis ≤ 20 cm vorliegen. Die Schaumstoffschicht kann entweder als fertiger Schaumstoff aufgetragen werden oder aber in Form einer Reaktionsmischung, welche auf der Haftvermittlerschicht erst zum fertigen Schaum reagiert.

Die Polyurethan und/oder Polyisocyanurat umfassenden Schaumstoffschicht dient vorzugsweise als wärmedämmende Schicht im Verbundelement. Man kann sie erhalten durch Umsetzung von Polyisocyanaten mit gegenüber Isocyanaten reaktiven Verbindungen, in Gegenwart von Katalysatoren, wobei das Umsetzungsverhältnis vorzugsweise so gewählt wird, dass im Reaktionsgemisch das Verhältnis von Anzahl an Isocyanatgruppen zu Anzahl an gegenüber Isocyanaten reaktiven Gruppen ≥ 1,8 bis ≤ 8 : 1, bevorzugt ≥ 1,9 bis ≤ 4 : 1 beträgt. Es ist möglich, dass die Dichte der Schaumstoffschicht beispielsweise ≥ 20 g/l bis ≤ 300 g/l beträgt.

Als Polyisocyanate kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI).

Als Verbindungen mit mindestens zwei gegenüber Isocyanat reaktiven Wasserstoffatomen kommen im allgemeinen solche in Frage, die zwei oder mehrere reaktive Gruppen wie zum Beispiel OH-Gruppen, SH-Gruppen, NH-Gruppen, NH₂-Gruppen und CH-acide Gruppen, wie β-Diketo-Gruppen, in Molekül tragen.

Insbesondere geeignet als Katalysatoren sind die aus dem Stand der Technik bekannten Isocyanuratgruppen bildende Katalysatoren, bevorzugt Alkalimetallsalze, wie Kaliumoctoat und/oder Kaliumacetat alleine oder in Kombination mit tertiären Aminen, eingesetzt. Die Polymerbildung, insbesondere Isocyanuratbildung, erfolgt vorteilhafterweise bei Temperaturen über 60 °C.

Der Umsetzung von Polyisocyanaten mit Polyolen werden bevorzugt Treibmittel zugegeben. Als Treibmittel werden im Allgemeinen sogenannte physikalische Treibmittel und gegebenenfalls Wasser eingesetzt. Unter physikalischen Treibmitteln versteht man Verbindungen, die in den Einsatzstoffen der Schaumherstellung gelöst oder emulgiert sind und unter den Bedingungen der Schaumbildung verdampfen. Dabei handelt es sich beispielsweise um Kohlenwasserstoffe handeln. Daneben ist es möglich, inerte Gase, wie Stickstoff, Kohlendioxid oder Edelgase unter Druck in den Schaum-Aufbaukomponenten zu lösen.

Selbstverständlich können im erfindungsgemäßen Verfahren nach dem Schritt C) auf die Schaumstoffschicht eine weitere Haftvermittlerschicht wie in Schritt B) und daran anschließend eine weitere Deckschicht wie in Schritt A) beschrieben aufgetragen werden. Man erhält dann ein beidseitig mit einer Deckschicht versehenes Schaumstoff-Verbundelement. Das Verfahren kann beispielsweise in einer konventionellen Doppelbandanlage durchgeführt werden.

In einer Ausführungsform des erfindungsgemäßen Verfahrens umfasst die Haftvermittlerdispersion, bezogen auf ihren Feststoffanteil, mit Polyolen und/oder Isocyanatgruppen vernetzbare Komponenten in einem Anteil von ≥ 0,05 Gewichts-% bis ≤ 50 Gewichts-%. Der Anteil kann auch ≥ 0,1 Gewichts-% bis ≤ 30 Gewichts-% oder ≥ 0,2 Gewichts-% bis ≤ 10 Gewichts-% betragen. Der Begriff "vernetzbar" bezeichnet hierbei insbesondere die Eigenschaft, zwei oder mehr Monomere, Oligomer- oder Polymerketten über kovalente Bindungen miteinander zu verknüpfen. Grundsätzlich geeignet hierfür sind zum einen Verbindungen mit zwei oder mehr gegenüber Isocyanatgruppen reaktiven funktionellen Gruppen wie OH-Gruppen, SH-Gruppen, NH-Gruppen, NH₂-Gruppen, organische Säuren und CH-acide Gruppen wie β-Diketogruppen. Zum anderen sind Verbindungen mit gegenüber Hydroxylgruppen reaktiven funktionellen Gruppen wie NCO-Gruppen, Säureanhydridgruppen, Carbodiimide oder Carboxylgruppen. Ebenfalls geeignet sind Partikel, welche die genannten funktionellen Gruppen, insbesondere OH-Gruppen, auf ihrer Oberfläche tragen. Es ist auch möglich, dass die vernetzbaren Komponenten in dem Polychloroprenpolymer enthalten sind. Dieses lässt sich durch die Copolymerisation mit geeigneten Monomeren oder durch nachträgliche Polymerfunktionalisierung erreichen. In diesem Fall bezieht sich die Angabe des Gewichtsanteils der vernetzbaren Komponenten auf den Gewichtsanteil des Monomers oder der Monomerenmischung im Polychloropren. Vorteilhaft am Einsatz der vernetzbaren Komponenten ist, dass sie eine bessere Anbindung und damit Haftung der Haftvermittlerschicht zu dem Polyurethan- und insbesondere Polyisocyanuratpolymer erlauben.

In einer weiteren Ausführungsform des erfindungsgemäßen Verfahrens weist die aufgetragene Haftvermittlerdispersion einen Feststoffanteil von ≥ 20 Gewichts-% bis ≤ 80 Gewichts-% auf. Der Anteil kann auch in einem Bereich von ≥ 30 Gewichts-% bis ≤ 70 Gewichts-% und mehr bevorzugt von ≥ 40 Gewichts-% bis ≤ 65 Gewichts-% liegen. Der Feststoffanteil ist so gewählt, dass vor Auftrag der Schaumkomponente eine ausreichende aber noch nicht abgeschlossene Filmbildung auf dem Träger erfolgt ist. Weiter muss die Menge verfügbaren Restwasser in der Haftvermittlerdispersion für die folgende Verklebung der Schaumschicht so justiert sein, dass eine Anbindung noch erfolgt ohne dass im Reaktivverfahren große Blasen aus Reaktion von Isocyanaten mit Wasser entstehen, die eine effektive Anbindung des Schaums an den Träger mittels Haftvermittlerdispersion verhindern.

In einer weiteren Ausführungsform des erfindungsgemäßen Verfahrens werden handelsübliche zur Kristallisation befähigte Polychloroprendsipersionen wie Dispercoll C 84, C74, C 2325, C VPLS 2372/1, C XP 2694, C XP 2717 der BMS-AG mit einem Feststoffgehalt von 28-58% oder vergleichbare Produkte der Firma DuPont, Denka, Tosoh, Shangxi eingesetzt, die sich hauptsächtlich durch Molekulargewicht, Vernetzungsgrad, pH und Kristallisationsgeschwindigkeit unterscheiden können. Diese Produkte können in dem erfindungsgemäßen Verfahren enthalten Abmischung mit anderen kompatiblen wässrigen Polymerdispersionen wie Polyacrylaten, Polyvinylacetaten, Styrolbutadien copolymeren sowie mit anderen gebräuchlichen Hilfs- und Zusatzstoffen (siehe dazu Firmenschrift die Neoprene Latex der DuPont sowie Formulierung von Kleb und Dichtstoffen von Bodo Müller, Walther Rath, Vinzentz Network GmbH&CoKG 2004).

In einer weiteren Ausführungsform des erfindungsgemäßen Verfahrens umfasst die Haftvermittlerdispersion weiterhin Siliziumdioxid-Partikel mit einer mittleren Teilchengröße von ≥ 1 nm bis ≤ 400 nm. Die zur Teilchengröße korrelierende spezifische Oberfläche kann bei 250 bis 1000 m²/g (nach DIN 66131) liegen. Es ist vorgesehen, dass die Siliziumdioxid-Partikel ebenfalls dispergiert vorliegen.. Eine Eigenschaft der Kieselsäuren ist ihre verdickende Wirkung in Formulierungen aus PolychloroprenDispersionen, die dazu führt, dass die so hergestellten Klebstoffe feinteilige, sedimentationsstabile Dispersionen bilden, sich gut verarbeiten lassen und auch auf porösen zu verklebenden Substraten eine hohe Standfestigkeit haben. Vorteilhafterweise umfasst die Haftvermittlerdispersion die Siliziumdioxid-Partikel in einer Menge von ≥ 1 Gewichts-% bis ≤ 70 Gewichts-%, bevorzugt ≥ 5 Gewichts-% bis ≤ 50 Gewichts-%, mehr bevorzugt ≥ 10 Gewichts-% bis ≤ 20 Gewichts-%, bezogen auf den Gesamtfeststoffgehalt der Haftvermittlerdispersion, auf.

Erfindungsgemäß geeignete Siliciumdioxid-Partikel können auf der Basis von Kieselsol, Kieselgel, pyrogenen Kieselsäuren, Fällungskieselsäuren oder deren Mischungen erhalten werden.

Kieselsäuresole sind kolloidale Lösungen von amorphem Siliciumdioxid in Wasser, die auch als Siliciumdioxidsole, meist aber kurz als Kieselsole bezeichnet werden.

Das Siliciumdioxid liegt dabei in Form von kugelförmigen und an der Oberfläche hydroxylierten Partikeln vor. Die zur Teilchengröße korrelierende spezifische BET-Oberfläche (bestimmt nach der Methode von G. N. Sears, Analytical Chemistry Vol. 28, N. 12,1981-1983, Dezember 1956) kann bei 15 bis 2000 m²/g liegen. Die Oberfläche der SiO₂-Teilchen weist eine Ladung auf, die durch ein entsprechendes Gegenion ausgeglichen wird, das zur Stabilisierung der kolloidalen Lösung führt. Die alkalisch stabilisierten Kieselsole besitzen einen pH-Wert von 7 bis 11,5 und enthalten als Alkalisierungsmittel beispielsweise geringe Mengen Na₂O, K₂O, Li₂O, Ammoniak, organische Stickstoffbasen, Tetraalkylammoniumhydroxide oder Alkali- oder Ammoniumaluminate. Kieselsole können auch als semistabile kolloidale Lösungen schwach sauer vorliegen. Ferner ist es möglich, durch Beschichtung der Oberfläche mit Al₂(OH)₅Cl kationisch eingestellte Kieselsole herzustellen. Während der Herstellung der Kieselsäuresole verlassen die SiO2-Partikel zu keinem Zeitpunkt den kolloidal gelösten Zustand. Hierdurch werden diskrete Primärpartikel mit hoher Bindereffektivität erhalten.

Unter Kieselgelen versteht man kolloidal geformte oder ungeformte Kieselsäure von elastischer bis fester Konsistenz mit lockerer bis dichter Porenstruktur. Die Kieselsäure liegt in Form von hochkondensierter Polykieselsäure vor. Auf der Oberfläche befinden sich Siloxan und/oder Silanol-Gruppen. Die Herstellung der Kieselgele erfolgt aus Wasserglas durch Umsetzung mit Mineralsäuren. Die zur Teilchengröße korrelierende spezifische Oberfläche kann bei 250 bis 1000 m²/g (nach DIN 66131).

Des Weiteren wird zwischen pyrogener Kieselsäure und Fällungskieselsäure unterschieden. Beim Fällungsverfahren wird Wasser vorgelegt und anschließend Wasserglas und Säure, wie H₂SO₄, simultan zugegeben. Dabei entstehen kolloidale Primärteilchen, die mit fortschreitender Reaktion agglomerieren und zu Agglomeraten verwachsen. Die spezifische Oberfläche kann bei 30 bis 800 m²/g liegen (DIN 66131). Die Primärpartikel von diesen als Feststoff vorliegenden Kieselsäuren sind in der Regel zu Sekundäragglomeraten fest vernetzt.

Pyrogene Kieselsäure kann durch Flammenhydrolyse oder mit Hilfe des Lichtbogenverfahrens hergestellt werden. Das dominierende Syntheseverfahren für pyrogene Kieselsäuren ist die Flammenhydrolyse, bei der Tetrachlorsilan in einer Knallgasflamme zersetzt wird. Die dabei gebildete Kieselsäure ist röntgenamorph. Pyrogene Kieselsäuren besitzen an ihrer nahezu porenfreien Oberfläche deutlich weniger OH-Gruppen als Fällungskieselsäure. Die über Flammhydrolyse hergestellte pyrogene Kieselsäure kann eine spezifische Oberfläche von 50 bis 600 m²/g (DIN 66131) aufweisen. Die über das Lichtbogenverfahren hergestellte Kieselsäure kann eine spezifische Oberfläche von 25 bis 300 m²/g (DIN 66131) aufweisen.

Bevorzugte erfindungsgemäße Haftvermittler-Dispersionen sind solche, in denen die SiO₂-Partikel der Siliciumdioxid-Dispersion als diskrete unvernetzte Primärpartikel vorliegen. Es ist ebenfalls bevorzugt, dass die SiO₂-Partikel über Hydroxylgruppen an der PartikelOberfläche verfügen. Besonders bevorzugt werden wässrige Kieselsäuresole eingesetzt.

In einer weiteren Ausführungsform des erfindungsgemäßen Verfahrens weist die Haftvermittlerdispersion beim Auftragen der Schaumstoffschicht einen Restwassergehalt von > 0,5 und < 40 Gewichts-%. auf. Der Restwassergehalt beträgt bevorzugt ≥ 1 und < 30 Gewichts-% oder ≥ 2 und < 30 Gewichtsprozent betragen. Bei diesen Restwassergehalten ist die Filmbildung in der Haftvermittlerdispersion noch nicht abgeschlossen und sie kann noch mit der Schaumstoffschicht oder dem zur Schaumstoffschicht führenden Gemisch reagieren. Hierdurch wird die Haftung verbessert.

In einer weiteren Ausführungsform des erfindungsgemäßen Verfahrens umfasst das Material der Deckschicht Aluminium, Stahl, Bitumen, Papier, Mineral-Vliesstoffe, organische Fasern umfassende Vliesstoffe, Kunststoff-Platten, Kunststoff-Folien und/oder Holzplatten. Bevorzugt ist hierbei, dass die Deckschicht eine Aluminium-Metall-Deckschicht ist. Ein Beispiel für eine Aluminium-Metall-Deckschicht ist ein Aluminium-Coil-Coating mit einer Dicke von 0,6 mm.

In einer weiteren Ausführungsform des erfindungsgemäßen Verfahrens wird die Deckschicht vor dem Auftragen der Haftvermittlerdispersion auf eine Temperatur von ≥ 30 °C bis ≤ 70 °C erwärmt. Das Erwärmen kann beispielsweise in einem Vorwärmofen als Bestandteil einer üblichen Doppelbandanlage durchgeführt werden. Die Temperatur der Deckschicht kann auch ≥ 40 °C bis ≤ 70 °C betragen.. Durch die leicht erhöhte Temperatur der Deckschicht, wird der Kristallisationsprozess der Haftvermittlerdispersion auf das gewünscht Maß eingestellt und damit die Kontaktklebefähigkeit verbessert.

In einer weiteren Ausführungsform des erfindungsgemäßen Verfahrens ist die Schaumstoffschicht erhältlich aus der Reaktion eines Polyisocyanate und wenigstens eine Verbindung ausgewählt aus der Gruppe bestehend aus Polyesterpolyolen und Polyetherpolyolen umfassenden Reaktionsgemisches, wobei im Reaktionsgemisch zu Beginn der Reaktion das molare Verhältnis von Isocyanatgruppen zu Hydroxylgruppen ≥ 1:1 bis ≤ 5:1 beträgt. Mit anderen Worten ausgedrückt, beträgt der Index dieser Reaktionsmischung 100 bis 500. Der Index kann auch ≥ 150 bis ≤ 350 oder ≥ 200 bis ≤ 300 betragen. Bei solchen Kennzahlen werden überwiegend Polyisocyanuratschäume erhalten, welche wie bereits ausgeführt mit geringeren Mengen an Flammschutzmitteln auskommen und durch das erfindungsgemäße Verfahren dennoch fest an Deckschichten, insbesondere Aluminiumdeckschichten, angebunden werden können. Der Polyisocyanuratschaumstoff ist vorzugsweise ein Hartschaumstoff, definiert anhand seiner Druckspannung bei 10% Stauchung beziehungsweise von ≥ 100 kPa bis ≤ 300 kPa. Diese Druckspannung oder Druckfestigkeit kann gemäß DIN 53421/DIN EN ISO 604 bestimmt werden. Sie kann auch in einem Bereich von ≥ 150 kPa bis ≤ 250 kPa oder von ≥ 180 kPa bis ≤ 280 kPa liegen.

In einer weiteren Ausftihrungsform des erfindungsgemäßen Verfahrens beträgt die Rohdichte der Schaumstoffschicht ≥ 25 g/l bis ≤ 48 g/l, besonders bevorzugt ≥ 35 g/l bis ≤ 45 g/l. Sie kann anhand der Norm ISO 845 bestimmt werden. Es ist auch möglich, dass die Rohdichte ganz besonders bevorzugt ≥ 37 g/l bis ≤ 42 g/l, noch weiter bevorzugt ≥ 39 g/l bis ≤ 40 g/l beträgt. Unabhängig davon ist es weiterhin auch möglich, dass die Schaumstoffschicht, wobei allgemein auch der Schaum der Schaumstoffschicht verstanden werden soll, eine Geschlossenzelligkeit von ≥ 85% bis ≤ 100%, vorzugsweise von ≥ 90% bis ≤ 100% auf, welche gemäß DIN ISO 4590 bestimmt werden kann. Weiterhin kann die Schaumstoffschicht einen mittleren Zelldurchmesser nach ASTM 3576-77 von ≥ 10 µm bis ≤ 600 µm, bevorzugt von ≥ 50 µm bis ≤ 400 µm, aufweisen.

Die vorliegende Erfindung betrifft ebenfalls die Verwendung einer wässrigen Polychloroprendispersion als Haftvermittler in der Herstellung von Schaumstoff-Verbundelementen. Zu Details wird auf die vorstehenden Ausführungen zum erfindungsgemäßen Verfahren verwiesen. Vorzugsweise ist die Dispersion beim Zusammenbringen von Deckschicht und Schaumstoffschicht noch reaktionsfähig, das heißt noch nicht vollständig getrocknet.

In einer Ausführungsform der erfindungsgemäßen Verwendung umfasst die Polychloroprendispersion weiterhin Siliziumdioxid-Partikel mit einer mittleren Teilchengröße von ≥ 1 nm bis ≤ 400 nm. Hierbei wird zur Vermeidung von Wiederholungen im vollen Umfang Bezug auf die obenstehenden Ausführungen zu Siliziumdioxid-Partikeln Bezug genommen.

Ein weiterer Gegenstand der vorliegenden Erfindung ist ein Schaumstoff-Verbundelement, erhalten durch ein erfindungsgemäßes Verfahren. Insbesondere beträgt in dem Schaumstoff-Verbundelement die Haftfestigkeit zwischen der Deckschicht und der Schaumstoffschicht ≥ 0,12 N/mm² bis ≤ 0,30 N/mm². Die Haftfestigkeit kann anhand der Norm DIN 53292 bestimmt werden. Sie kann auch ≥ 0,13 N/mm² bis ≤ 0,29 N/mm² oder ≥ 0,14 N/mm² bis ≤ 0,28 N/mm² betragen.

In einer weiteren Ausführungsform des erfindungsgemäßen Schaumstoff-Verbundelements weist dieses eine Wärmeleitfähigkeit von ≤ 35 mW/mK auf. Diese kann anhand der Norm DIN 52612 (Teil 1) bestimmt werden. Es ist auch möglich, dass die Wärmeleitfähigkeit < 35 mW/mK beträgt. Die Untergrenze für die Wärmeleitfähigkeit ist nicht weiter festgelegt und kann beispielsweise ≥ 10 mW/mK betragen.

Die vorliegende Erfindung wird anhand der nachfolgenden Beispiele weiter erläutert.

Als Haftvermittler wurde eine Formulierung umfassend eine Polychloroprendispersion und eine Nanosilicasuspension mit einem Nassgewicht von etwa 150 g/m² aufgetragen.

### Herstellung der Formulierung.

Die Bestandteile werden in einem 51 Becherglas zusammengeführt und 1 min bei mittlerer 100 U/min gerührt.

Die Neutralisation der Formulierung mit einem Anfangs-pH von 10,9 wird mittels Überleiten von CO₂ und Rühren der Formulierung bis zur Erreichung des gewünschten pH durchgeführt.

Alternativ kann die Neutralisation in einem Statikmischer durch Zusammenführen von Formulierung und CO₂ bei einem Ausgangs-Flüssigkeitsdruck von 1bar und CO₂ Druck von 2 bar durchgeführt werden. Die notwendige CO₂ Menge zur Erreichung von pH 8 der Formulierung wird dabei über ein Reduzierventil dosiert. Dabei werden etwa 3,5g CO₂ / 1 Formulierung benötigt.

| Formulierung: | Gewichtsteile / % | |
|---|---|---|
| Dispercoll C VPLS 2372/1 | 58 | |
| Dispercoll C 2325 | 25 | |
| Dispercoll S 3030 | 17 | |
| Neutralisiert mit CO₂ bis zu pH 8 | | |
| Viskosität nach DIN EN ISO 2555 | | < 100 mPas |
| Viskosität nach DIN EN ISO 2555, gemessen nach 24h | | 2000 mPas |

Auftrag der Haftvermittlerdispersion erfolgt mittels Sprühauftrag mit einer handelsüblichen Niederdruck HVLP Sprühpistole, 1,8 mm Düse, 1,5 bar auf den Träger.

Es wurde die Haftfestigkeit in Anlehnung an die Norm DIN 53292 überprüft. Die Durchführung unterscheidet sich dabei vom Zugversuch senkrecht zur Deckschichtebene nach DIN 53292-82 durch die unterschiedliche Probendicke und Anzahl der Deckschichten. Beim Versuch nach DIN 53292-82 wird die gesamte Dicke der Deckschichten zugrunde gelegt. Dabei bestimmt der schwächste Bereich der Gesamtprobe den Bruchort. Demgegenüber erlaubt der Haftversuch in der hier beschriebenen Abwandlung eine seitenbezogene Beurteilung der Haftung.

Zur Probenentnahme wird daher ein Verbundelement senkrecht zu den Deckschichten geschnitten. Bei der Messung werden quadratische Proben verwendet, deren Seitenlänge 50 mm und deren Probenhöhe 15 mm (einschließlich der Deckschicht) beträgt.

Ebenfalls wurde die Blasenbildung nach Temperung bei 105 °C für 1 h überprüft.

## Patentansprüche

1. Verfahren zur Herstellung eines Schaumstoff-Verbundetements, umfassend die Schritte:
A) Bereitstellen einer Deckschicht;
B) Auftragen einer Haftvermittlerschicht auf die Deckschicht, wobei die Haftvermittlerschicht eine Haftvermittlerdispersion umfasst;
C) Auftragen einer Polyurethan und/oder Polyisocyanurat umfassenden Schaumstoffschicht auf die Haftvermittlerschicht;
**dadurch gekennzeichnet, dass** die aufgetragene Haftvermittlerdispersion in Wasser dispergiertes Polychloropren umfasst.

2. Verfahren gemäß Anspruch 1, wobei die Haftvermittlerdispersion, bezogen auf ihren Feststoffanteil, mit Polyolen und/oder Isocyanatgruppen vernetzbare Komponenten in einem Anteil von ≥ 0,05 Gewichts-% bis ≤ 50 Gewichts-% umfasst.

3. Verfahren gemäß Anspruch 1, wobei die aufgetragene Haftvermittlerdispersion einen Feststoffanteil von ≥ 20 Gewichts-% bis ≤ 80 Gewichts-% aufweist.

4. Verfahren gemäß Anspruch 1, wobei die Haftvermittlerdispersion weiterhin Siliziumdioxid-Partikel mit einer mittleren Teilchengröße von ≥ 1 nm bis ≤ 400 nm umfasst.

5. Verfahren gemäß Anspruch 1, wobei die Haftvermittlerdispersion beim Auftragen der Schaumstoffschicht einen Restwassergehalt von ≥0,5 und < 40 Gewichts-%. aufweist.

6. Verfahren gemäß Anspruch 1, wobei das Material der Deckschicht Aluminium, Stahl, Bitumen, Papier, Mineral-Vliesstoffe, organische Fasern umfassende Vliesstoffe, Kunststoff-Platten, Kunststoff-Folien, Thermoplast / Elastomerschäume und/oder Holzplatten umfasst.

7. Verfahren gemäß Anspruch 1, wobei die Deckschicht vor dem Auftragen der Haftvermittlerdispersion auf eine Temperatur von ≥ 30 °C bis ≤ 70 °C erwärmt wird.

8. Verfahren gemäß Anspruch 1, wobei die Schaumstoffschicht erhältlich ist aus der Reaktion eines Polyisocyanate und wenigstens eine Verbindung ausgewählt aus der Gruppe bestehend Polyesterpolyolen und Polyetherpolyolen umfassenden Reaktionsgemisches, wobei im Reaktionsgemisch zu Beginn der Reaktion das molare Verhältnis von Isocyanat-Gruppen zu Hydroxyl-Gruppen ≥ 100:100 bis ≤ 400:100 beträgt.

9. Verfahren gemäß Anspruch 1, wobei die Rohdichte der Schaumstoffschicht ≥ 35 g/l bis ≤ 48 g/l beträgt.

10. Verfahren gemäß Anspruch 1, wobei die Schaumstoffschicht eine Druckspannung bei 10% Stauchung von ≥ 100 kPa bis ≤ 300 kPa aufweist.

11. Verwendung einer wässrigen Polychloroprendispersion als Haftvermittler in der Herstellung von Schaumstoff-Verbundelementen.

12. Verwendung gemäß Anspruch 11, wobei die Polychloroprendispersion weiterhin Siliziumdioxid-Partikel mit einer mittleren Teilchengröße von ≥ 1 nm bis ≤ 400 nm umfasst.

13. Schaumstoff-Verbundelement, erhalten durch ein Verfahren gemäß Anspruch 1, **dadurch gekennzeichnet, dass** die Haftfestigkeit zwischen der Deckschicht und der Schaumstoffschicht ≥ 0,12 N/mm² beträgt.

14. Schaumstoff-Verbundelement gemäß Anspruch 14 mit einer Wärmeleitfähigkeit von ≤ 35 mW/mK.
